(19) Europäisches Patentamt
European Patent Office
Office européen des brevets

(11) Veröffentlichungsnummer: **0 049 687**
**B1**

(12) # EUROPÄISCHE PATENTSCHRIFT

(45) Veröffentlichungstag der Patentschrift: **08.01.86**

(21) Anmeldenummer: **81810396.2**

(22) Anmeldetag: **30.09.81**

(51) Int. Cl.[4]: **C 08 G 59/50**, C 07 C 147/12, C 08 G 59/02, B 32 B 27/04, C 08 J 5/24 // C09J3/16

(54) **Modifiziertes Aminhärtersystem für Epoxidharze und seine Verwendung.**

(30) Priorität: **06.10.80 US 194094**
**26.05.81 US 267117**

(43) Veröffentlichungstag der Anmeldung: **14.04.82 Patentblatt 82/15**

(45) Bekanntmachung des Hinweises auf die Patenterteilung: **08.01.86 Patentblatt 86/2**

(84) Benannte Vertragsstaaten: **DE FR GB IT NL SE**

(56) Entgegenhaltungen:
**CH - A - 406 640**
**DE - A - 2 228 583**
**FR - A - 2 143 366**
**US - A - 2 993 026**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **King, John J., 108 Bennett Road, East Haven Connecticut 06513 (US)**
Erfinder: **Sellers, Ralph F., 71 Smith Road, Somerset New Jersey 08873 (US)**
Erfinder: **Castonguay, Richard N., 18 Pond Crest Road, Danbury Connecticut 06810 (US)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 049 687 B1

ACTORUM AG

**Beschreibung**

Anlagerungsprodukte von Aminen und Mono- und Diepoxiden wurden seit langem als Härter für Epoxiharze technisch verwendet. Die Vorteile der Bildung solcher Anlagerungsprodukte sind unter anderem eine niedrigere Flüchtigkeit, geringeres Reizrisiko, eine verminderte Tendenz zum Anlaufen und Ausschwitzen, und dergleichen. Derartige Anlagerungsprodukte sind in «Handbook of Epoxy Resins» von H. Lee und K. Neville, McGraw Hill (1967) erörtert.

Derartige Systeme wurden vielfach in der Luft- und Raumfahrtindustrie verwendet. Ein Hauptanwendungsgebiet liegt bei Epoxidharzen, die zur Vorimprägnierung verschiedener Fasern zum Endzweck als Wabenhäute eingesetzt werden. Diese unterschiedlichen Schichtstoffe werden im Luft- und Raumfahrtbau verwendet. Das zur Zeit gebräuchlichste Epoxidsystem zur Herstellung von Präpregs und zum Laminieren basiert auf tetraglycidyliertem Methylendianilin und einem Diaminodiphenylsulfonhärter. Diese Systeme besitzen zwar Vorteile, doch zeigen sie auch mehrere bedeutsame Nachteile. Diese ergeben sich primär aus der Unverträglichkeit des Härters mit dem Harz und der Schwerlöslichkeit im Epoxidharz. Spezielle Nachteile der Verarbeitung sind unter anderem:

1. Die Notwendigkeit höherer Temperaturen, um den Härter ohne Verwendung von Fremdlösungsmitteln in Lösung zu bringen;

2. die unerwünschte Vorverlängerung des Härters mit dem Epoxid, was üblicherweise einen Zusatz anderer Harze erfordert, um die Anpassungsfähigkeit und die Klebrigkeit zu verbessern, und dabei gewöhnlich die Schmelzviskosität herabsetzt;

3. das erforderliche Erhitzen, um gegebenenfalls verwendete Lösungsmittel zu entfernen, wodurch eine gewisse Vorverlängerung stattfindet; und

4. die Schwierigkeit, die gewünschte Fliessfähigkeit zu erzielen und zu beherrschen, wodurch Unterschiede im Präpreg innerhalb desselben Ansatzes entstehen.

Obwohl die erhaltenen Systeme funktionsfähig sind und erfolgreich laminiert werden können, zeigen sie doch auch eine Reihe von Nachteilen, einschliesslich:

1. Sie besitzen einen hohen Modul und sind spröde.

2. Sie sind in gewissem Masse feuchtigkeitsempfindlich.

3. Es ist schwierig, bei der Herstellung von Systemen mit niedrigem – oder keinem – Verlauf Reproduzierbarkeit zu erzielen.

4. Die Herstellung von Wabenkernverbundstoffen mit diesen Systemen ist schwierig, da sie schlechte Fliesseigenschaften aufweisen, die einen Verlauf des Harzes in den Kern zulassen und somit Hohlräume in den Häuten verursachen.

Aus der FR-A-2 143 366 sind ferner lagerstabile, schnellhärtende Epoxidharzpressmassen bekannt, worin als Epoxidharzhärtungsmittel aminogruppenhaltige Voraddukte eingesetzt werden, die aus aromatischen Diaminen und Glycidylverbindungen erhalten werden. Näher beschrieben werden darin aminogruppenhaltige Addukte auf Basis von 4,4'-Diaminodiphenylmethan, 4,4'-Diaminodiphenylsulfid, 4,4'-Diaminoditoluylmethan und m-Phenylendiamin.

Es wurde nun überraschenderweise gefunden, dass man durch Umsetzung des Diaminodiphenylsulfons mit einem Diglycidyläther eines mehrwertigen Phenols die Verarbeitungskennwerte des Härtersystems und die Leistungskennwerte des damit gehärteten Epoxidharzes dramatisch verbessern kann, ohne dabei die übrigen erwünschten Eigenschaften erheblich zu beeinträchtigen. Die letzteren Kennwerte zeigen sich insbesondere bei Verwendung des modifizierten Härters zusammen mit tetraglycidyliertem Methylendianilin. Die verbesserte Verträglichkeit mit dem Harz und die erhöhte Schmelzviskosität führen bemerkenswerterweise zu kontrollierbaren Fliesseigenschaften. Die erhaltenen Systeme lassen sich laminieren oder in Wabenhäuten verwenden und zeigen verbesserte Schlagbiegefestigkeit, Zähigkeit, Festigkeit und Wasserbeständigkeit.

Im einzelnen werden unter anderen folgende Verarbeitungsparameter verbessert:

1. Erhöhte Verträglichkeit des Härters mit dem Epoxidharz. Der Härter wird bei niedrigeren Temperaturen löslich, was die Chance einer unerwünschten Vorverlängerung verringert. Ebenfalls wird die Möglichkeit unvollständiger Auflösung oder Vermischung vermindert.

2. Die Schmelzviskosität des Systems lässt sich durch das Molekulargewicht des Härters beherrschen. Dadurch entfällt die Notwendigkeit schwer kontrollierbarer Vorverlängerungsstufen bei der Herstellung des Harzsystems.

3. Die Verwendung von Harzzusätzen, um gute Anpassungsfähigkeit und Klebrigkeit zu erzielen, ist nach wie vor möglich.

4. Da weniger Vorverlängerung nötig ist, lässt sich die Vorverlängerung des Harzes auf dem Präpreg leichter kontrollieren.

5. Der modifizierte Härter ermöglicht die reproduzierbare Herstellung von Präpregs mit keinem – oder niedrigem – Verlauf zur Verwendung mit oder ohne Waben.

Dazu kommt, dass die mit den vorliegenden Härtersystemen gehärteten Harze folgende verbesserte Eigenschaften aufweisen:

1. Solche Systeme lassen sich leicht laminieren.

2. Sie sind zäher und besitzen eine höhere Schlagbiegefestigkeit als herkömmlich gehärtete Systeme.

3. Sie zeigen erhöhte mechanische Festigkeit.

4. Sie weisen erhöhte Feuchtigkeitsbeständigkeit auf.

5. Sie besitzen eine höhere Schmelzflussviskosität.

6. Die vorliegenden Systeme sind ferner kautschuk-modifizierten Systemen bei weitem überlegen.

Gemäss diesen beschriebenen Kennwerten ist das modifizierte Härtersystem zur Verwendung in

Primärverbundstrukturen geeignet, einem Anwendungsgebiet, auf welchem die bestehenden Systeme keine zufriedenstellende Leistungsfähigkeit besassen. Das modifizierte Härtersystem kann auch mit sehr verschiedenen difunktionellen und multifunktionellen Epoxidharzen zur Verwendung in einem weiten Anwendungsgebiet wie Beschichtungen, Brechgüssen, Klebstoffen und Faserwickelkörpern verwendet werden.

Das modifizierte Härtersystem wird dadurch hergestellt, dass man eine Anlagerungsreaktion des Epoxidharzes mit der Diaminodiphenylsulfonverbindung durchführt. Die zu verwendenden Diaminodiphenylsulfone entsprechen der Formel

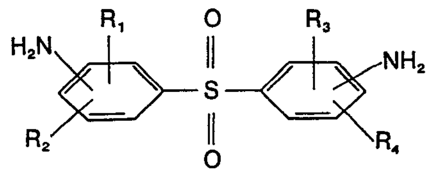

worin $R_1$, $R_2$, $R_3$ und $R_4$ unabhängig voneinander für Wasserstoff, geradkettiges oder verzweigtes Alkyl mit 1 bis 12 Kohlenstoffatomen, vorzugsweise 1 bis 4 Kohlenstoffatomen, oder Halogen stehen. Handelsübliche Sulfone sind unter anderen 2,4'-, 3,3'- und 4,4'-Diaminodiphenylsulfon. Solche Diaminodiphenylsulfone sind für Erfindungszwekke bevorzugt.

Die zu verwendenden Epoxidharze sind Diglycidyläther mehrwertige Phenole. Zu solchen Stoffen gehören Bis-phenoldiglycidyläther der Formel

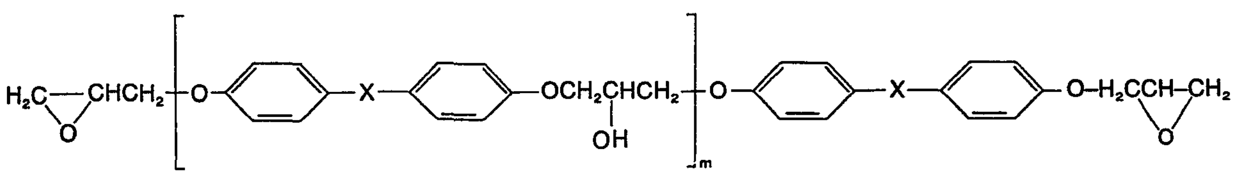

worin m 0–50 ist und X für

$-CH_2-$, 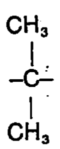 oder 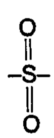

steht.

Dabei handelt es sich um Bisphenol F, A bzw. S. Weitere verwendbare Äther sind unter anderen die Diglycidyläther des Resorcins, Brenzkatechins, Hydrochinons und dergleichen. Die verschiedenen Äther können an den jeweiligen Phenylringen durch nicht-reaktionsfähige Substituenten wie Alkyl, Halogen und dergleichen substituiert sein.

Die allgemeine Arbeitsweise zur Herstellung des modifizierten Härters besteht darin, dass man eine Lösung des Diglycidyläthers in einem geeigneten Lösungsmittel herstellt, das Sulfon einmischt und das erhaltene Gemisch bei einer Temperatur von etwa 130–180 °C erhitzt, bis die Reaktion zu Ende ist. Dies erfordert im allgemeinen 2–6 Stunden und lässt sich durch Analysenverfahren verfolgen, wobei das Verschwinden der Epoxidfunktion die Vollständigkeit anzeigt. Die Entfernung des Lösungsmittels erfolgt im allgemeinen durch Verdunsten während der weiteren Verarbeitung. Verwendbare Lösungsmittel sind unter anderen Ketone, aromatische Kohlenwasserstoffe wie Toluol, und dergleichen. Je nach der Art der Komponentenmischung kann man in manchen Fällen das Lösungsmittel weglassen.

Manchmal ist es erwünscht, das Harz an Ort und Stelle durch Mitumsetzung des Diglycidyläthers mit zusätzlichem mehrwertigem Phenol herzustellen. Dabei kann man kleine Mengen eines geeigneten Katalysators wie Alkalihydroxide, tertiäre Amine, quartäre Amine und dergleichen einsetzen.

Die Konzentrationen des Sulfons werden so gewählt, dass man ein modifiziertes Härtesystem mit etwa 2,5 bis 100 Äquivalenten Aminowasserstoff pro Epoxidäquivalent erhält. Diese Werte sind so ausgewählt, dass Gelierung bei niedrigeren als den angegebenen Werten und schlechtere physikalische Eigenschaften bei höheren vermieden werden.

Wie zuvor angegeben, kann man das modifizierte Härtesystem mit sehr verschiedenen Epoxidharzen verarbeiten. Zu diesen gehören Harze wie Epoxidharze auf Grundlage mehrwertiger Phenole wie Bisphenol A, F und S, Epoxidationsprodukte von Kresolnovolaken und Phenolnovolaken, Hydantoinepoxidharze, Polyglycidylester, glycidylierte aromatische Amine, glycidylierte Aminophenole und gewisse cycloaliphatische Epoxiharze. Für Zwecke der vorliegenden Erfindung wird tetraglycidyliertes Methylendianilin bevorzugt. Zudem wird das Harz auf Grundlage des Bisphenol-A-Diglycidyläthers weithin zur Verwendung in Klebstoffen, Beschichtungen und Faserwicklungen eingesetzt. Der modifizierte Härter wird in stöchiometrischen Mengen ± 50% bezogen auf das Epoxiharz eingesetzt, wobei 85% der stöchiometrischen Menge bevorzugt sind.

Die Technik zur Herstellung von Präpregs ist dem Fachmann wohlbekannt. Bei Wabenhäuten lassen sich mit Graphit, Glas oder Kevlar verstärkte Häute wie auch andere leicht aus dem vorliegenden System herstellen. Die Technik zur Herstellung von Laminaten ist entsprechend wohlbekannt. Derartige Laminate können durch Verpressen oder Formung im Autoklaven hergestellt werden und können einen weiten Dickebereich decken.

Naben den obigen Anwendungsgebieten sind die erfindungsgemässen Anlagerungsprodukte auch als Härter für sehr verschiedentliche Epoxidharze bei unterschiedlichen Heisshärtungsanwendungen nützlich. Wenn mit Di- und Polyepoxiden in im allgemeinen stöchiometrischen Mengen kombiniert und bei erhöhten Temperaturen erhärtet, ergibt sich ein Netzwerk hoher Vernetzungsdichte. Dementsprechend bedeutet der Ausdruck «Härtung», wie hier verwendet, die Umwandlung der obigen Anlagerungsprodukte und Epoxidstoffe in unlösliche und unschmelzbare vernetzte Produkte bei gleichzeitiger Verformung zu Formkörpern wie Giesslingen, Presslingen oder Laminaten oder zu Flächengebilden wie Beschichtungen, Lackfarben oder Klebverbindungen. Wegen der verbesserten Verträglichkeit mit Harzen und der erhöhten Zähigkeit der entstehenden gehärteten Beschichtungen ist das modifizierte Härtersystem besonders vorteilhaft bei der Herstellung von Beschichtungen.

Die erfindungsgemäss hergestellten und mit anderen Polyepoxidverbindungen vermischten Anlagerungsprodukte können ferner in irgendeiner Stufe vor der Härtung mit üblichen Modifizierungsmitteln wie Streckmitteln, Füllstoffen und Verstärkungsmitteln, Pigmenten, Farbstoffen, organischen Lösungsmitteln, Weichmachern, Mitteln zur Verbesserung der Trockenklebrigkeit, Kautschuken, Beschleunigern, Verbindungsmitteln und dergleichen vermischt werden. Die folgenden seien als Beispiele für in den erfingungsgemässen härtbaren Gemischen verwendbare Streckmittel, Verstärkungsmittel, Füllstoffe und Pigmente genannt: Steinkohlenteer, Bitumen, Glasfasern, Borfasern, Kohlenstoffasern, Cellulose, Polyäthylenpulver, Polypropylenpulver, Glimmer, Asbest, Quarzmehl, Gips, Antimontrioxid, Bentonit, Kieselsäureaerogel («Aerosil»), Lithopone, Baryt, Titandioxid, Russ, Graphit, Eisenoxyd oder Metallpulver wie Aluminium- oder Eisenpulver. Auch kann man sonstige übliche Zusatzstoffe, zum Beispiel Flammschutzmittel, Thixotropiemittel, Verlaufmittel wie Silikone, Celluloseacetatbutyrat, Polyvinylbutyrat, Wachse, Stearate und dergleichen (die teilweise auch als Entformungsmittel dienen) den härtbaren Gemischen zusetzen.

Bei Klebstofformulierungen kann man beispielsweise auch Kautschuke wie Acrylonitril/Butadien Kautschuk mit Carbonylendgruppen, Modifizierharze wie Triglycidyl-p-aminophenol, Beschleuniger wie Bortrifluorid-monoäthylamin- oder -imidazolkomplexe sowie weitere zusätzliche Härter wie Dicyandiamid dazugeben.

Die härtbaren Gemische lassen sich in üblicher Weise mit Hilfe bekannter Mischapparate (Rührer, Kneter, Walzen und dergleichen) herstellen.

Die nachfolgenden Beispiele dienen der weiteren Erläuterungen von Ausführungsformen der vorliegenden Erfindung. Dabei sind Teile Gewichtsteile, falls nicht anders angegeben.

Beispiel 1:

Das nachfolgende Beispiel erläutert die Herstellung typischer, erfindungsgemäss modifizierter Härter.

| | Härter Nr. 1 Teile | | Härter Nr. 2 Teile | |
|---|---|---|---|---|
| Bisphenol-A-diglycidyläther[1] | 100,0 | 0,530 Epoxi | 100,0 | 0,530 Epoxi |
| Bisphenol A | 29,0 | 0,254 OH | 29,0 | 0,254 OH |
| 50% NaOH | 0,008 | | 0,008 | |
| Nach beendeter Umsetzung | | 0,276 Epoxi | | 0,276 Epoxi |
| Methyläthylketon | 86,0 | | 86,0 | |
| 4,4'-Diaminodiphenylsulfon | 160,0 | 2,581 NH | 129,0 | 2,081 NH |
| Theoretische Ausbeute | 289,0 | 2,305 NH | 258 | 1,805 NH |
| Berechnetes Äquivalentgewicht | 125,0 | | 143 | |

[1] Epoxidharz A

Der Diglycidyläther wird in ein Gefäss eingebracht und auf 100 °C erhitzt. Dann gibt man Bisphenol A und NaOH dazu, wobei man die Temperatur auf 100 °C hält. Der Druck wird auf etwa 133 mbar erniedrigt und die Temperatur auf 160 °C erhöht und 2–3 Stunden beibehalten, bis der Epoxidwert 0,21–0,22 Äquivalente auf 100 Gramm erreicht. Dann wird auf Rückfluss bei Atmosphärendruck umgeschaltet, das Keton zur Auflösung des Harzes zugesetzt und das System gekühlt. Danach gibt man das Diaminodiphenylsulfon dazu. Zur Destillation wird die Aufschlämmung auf 180 °C erhitzt und der Druck wiederum auf 100 Torr erniedrigt. Man hält das System noch

drei Stunden bei 180 °C, wonach das geschmolzene Produkt ausgetragen wird.

Beispiel 2:

| | Härter Nr. 3 Teile | | Härter Nr. 4 Teile | |
|---|---|---|---|---|
| Epoxidharz A | 100,0 | 0,530 Epoxi | 100,0 | 0,530 Epoxi |
| Bisphenol A | 51,8 | 0,454 OH | 51,8 | 0,454 OH |
| 50% NaOH | 0,008 | | 0,008 | |
| Nach beendeter Umsetzung | | 0,076 Epoxi | | 0,076 Epoxi |
| Methylisobutylketon | 50,0 | | 50,0 | |
| Methyläthylketon | 51,2 | | 51,2 | |
| 4,4'Diaminodiphenylsulfon | 159,8 | 2,577 NH | 126,5 | 2,041 NH |
| Theoretische Ausbeute | 311,6 | 2,501 NH | 278,3 | 1,964 NH |
| Berechnetes Äquivalentgewicht | 125 | | 142 | |

Der Diglycidyläther wird in ein Gefäss eingebracht und auf 115 °C erhitzt. Dann gibt man Bisphenol A und NaOH dazu, wobei man die Temperatur auf 100 °C hält. Der Druck wird auf etwa 133 mbar erniedrigt und die Temperatur auf 190 °C erhöht und drei Stunden bei 190 °C–200 °C gehalten, bis der Epoxidwert 0,050 Äquivalente auf 100 Gramm erreicht. Dann wird auf Rückfluss bei Atmosphärendruck umgeschaltet, die Ketone zur Auflösung des Harzes zugesetzt und das System abgekühlt. Danach gibt man das Diaminodiphenylsulfon dazu. Zur Destillation wird die Aufschlämmung auf 180 °C–185 °C erhitzt und der Druck wiederum auf 100 Torr erniedrigt. Man hält das System noch drei Stunden bei 180 °C–185 °C, wonach das geschmolzene Produkt ausgetragen wird.

Beispiel 3:

Die nachfolgenden Beispiele beziehen sich auf die Leistungskennwerte der modifizierten Härter aus Beispielen 1 und 2 sowie auf das verarbeitete Epoxidharz. Dabei wird jeweils tetraglycidyliertes Methylendianilin (Epoxidharz B) eingesetzt. Zur Kontrolle wird ein unmodifizierter 4,4'-Diaminodiphenylsulfonäther ebenfalls geprüft. In allen Kombinationen beträgt der Aminowasserstoff 85% der stöchiometrischen Menge bezogen auf Epoxidäquivalent.

I. Die physikalischen Eigenschaften der vier hergestellten modifizierten Härter sowie des unmodifizierten Härters (Kontrolle) sind unten angegeben:

Eigenschaften der Härterkomponente

| Komponente | Kontrolle | Härter Nr. 1 | Nr.2 | Nr. 3 | Nr. 4 |
|---|---|---|---|---|---|
| Aminowasserstoff-äquivalentgewicht (gval) | 62 | 125 | 142 | 125 | 142 |
| Erweichungspunkt (°C) | – | 105–110 | 105–110 | 105–110 | 105–110 |
| Schmelzpunkt (°C) | 170 | – | – | – | – |
| Viskosität der Lösung, 60% MEK ($mm^2/_s$) | – | 275–370 | 400–625 | 885–1290 | 1290–1760 |

Es ist zu bemerken, dass das mittlere Molekulargewicht der modifizierten Härter von Nr. 1 auf Nr. 4 zunimmt, wie aus den Lösungsviskositäten ersichtlich ist, sowie dass sämtliche modifizierte Härteausführungen eine verbesserte Löslichkeit in dem geschmolzenen Epoxidharz B aufweisen, während der reine Härter weniger verträglich ist.

II. Fliesseigenschaften:

Die Schmelzviskositäten werden für die fünf Systeme (Tabelle 2) jeweils dadurch bestimmt, dass man eine bekannte Menge Epoxidharz B in eine Aluminiumschale gibt und auf 150 °C erhitzt. Dann versetzt man mit der erforderlichen Menge Härter und mischt gründlich für 142 Sekunden. Man entfernt die Schale von der Heizquelle und lässt sie auf Raumtemperatur abkühlen.

Die Schmelzviskositäten der Gemische werden auf einem Kegel- und Plattenviskosimeter (Research Equipment, London, Ltd.) bei 150 °C bestimmt. Der bei dieser Messung erhaltene Wert stellt eine Anfangsviskosität bei erhöhter Temperatur dar, die mit der beim Härtungsvorgang erhaltenen Minimumviskosität in Beziehung steht. Vergleichsprüfungen zwischen dieser Kegel- und Plattenviskosität und der Minimumviskosität nach

Rheometrics DMA (2 °C/min Erhitzungsgeschwindigkeit) zeigen eine hohe positive Korrelation. Die diese Beziehung beschreibende Gleichung lautet:

Gleichung (1):
$\log [R] = 1{,}59 \log [B/4] - 1{,}43$
$r = 0{,}999$

wobei:

R = Rheometrics-Minimumviskosität in mPa.s für eine Erhitzungsgeschwindigkeit von 2 °C/min.
B = Kegel- und Plattenviskosität in mPa.s bei 150 °C.

In der nachfolgenden Tabelle sind die Kegel- und Plattenviskositäten bei 150 °C für jedes der fünf Systeme sowie die projizierte Minimumviskosität nach Rheometrics DMA laut Gleichung (1) angegeben.

Kegel- und Plattenviskositäten bei 150°C und projizierte Minimumviskosität nach Rheometrics

Viskosität

| System | Kegel und Platte bei 150°C (mPa.s) | Projizierte Viskosität nach Rheometric DMA (mPa.s)* |
|---|---|---|
| Kontrolle | 320 | 40 |
| 1 | 1520 | 470 |
| 2 | 2600 | 1100 |
| 3 | 3500 | 1800 |
| 4 | 6600 | 4900 |

*Bei 2°C/min Erhitzungsgeschwindigkeit erhaltene Minimumviskosität.

Diese Daten sind bedeutsam, da in der Luft- und Raumfahrtindustrie ein Bedarf für ein Hochleistungsharzsystem mit «kontrolliertem Verlauf» besteht. Kontrollierter Verlauf lässt sich als höhere Minimumschmelzflussviskosität während eines unveränderlichen Verarbeitungszyklus definieren. Diese Eigenschaft ist für Präpregsysteme mit niedrigem oder keinem Auslauf zur Verwendung als Wabenhäute vorteilhaft. Die modifizierten Systeme zeigen verschiedene Ausmasse von Zunahmen in der Schmelzviskosität oder «kontrolliertem Verlauf» je nach der Molekulargewichtverteilung des Härters. Die oben angegebenen Daten demonstrieren diesen Effekt mit einer mehr als 100-fachen Zunahme der Schmelzflussviskosität in System Nr. 4 gegenüber dem Standardsystem.

III. Kennwerte des reinen Harzes:

Giesslinge aus reinem Harz werden durch vorsichtiges Erhitzen von Epoxidharz B auf 135 °C und langsames Einführen des gepulverten Härters, bis man eine klare Mischung erhält, hergestellt. Das Epoxidharz und der Härter zusammen werden zwanzig Minuten bei 135 °C im Vakuum bei 101,59 kPa (762 Torr) entgast, um jegliche Luft oder gelöste Gase zu entfernen. Dann wird das Material in eine Plattenform gegossen und gehärtet. Der Härtungsplan und die Epoxid/Härteranteile für die untersuchten Systeme sind unten angegeben.

Reine Harzsystemkomponenten und Härtungszyklus

| Komponente (Gewichtsteile) \ System | Kontrolle | 1 | 2 | 3 | 4 |
|---|---|---|---|---|---|
| Epoxidharz B | 100 | 100 | 100 | 100 | 100 |
| Kontrolle | 44 | – | – | – | – |
| Nr. 1 | – | 85 | – | – | – |
| Nr. 2 | – | – | 100 | – | – |
| Nr. 3 | – | – | – | 85 | – |
| Nr. 4 | – | – | – | – | 100 |

Harzhärtung:
2 Stunden/80°C
1 Stunde/100°C
4 Stunden/150°C
7 Stunden/200°C

Die Biege- und Festigkeitsdaten des gehärteten reinen Harzes für die fünf Systeme werden bei Raumtemperatur und 150 °C gemäss ASTM-Prüfmethoden D-790 bzw. D-638 erhalten. Zusätzlich bestimmt man die Druckfestigkeitseigenschaften bei Raumtemperatur nach ASTM D-695.

Die Wärmestandfestigkeiten (HDT) der Harzsysteme werden nach ASTM D-648 bestimmt. Zur Bestimmung des Glasübergangspunkts (Tg) wird eine thermomechanische Analyse (TMA) im Durchstossversuch mit einer Erhitzungsgeschwindigkeit von 10 °C/min und 5 Gramm Last durchgeführt. Diese Werte sind unten angegeben:

Physikalische Eigenschaften des reinen Harzes

| Eigenschaft \ System | Kontrolle | Nr. 1 | Nr. 2 | Nr.3 | Nr.4 |
|---|---|---|---|---|---|
| Raumtemperatur: | | | | | |
| Zugfestigkeit (MPa) | 58,84 | 63,65 | 48,05 | 83,85 | 79,34 |
| Zugmodul (MPa) | 3736,47 | 3491,29 | 3432,45 | 3687,43 | 3481,49 |
| Zugdehnung (%) | 1,8 | 2,0 | 1,5 | 2,7 | 2,6 |
| Biegefestigkeit (MPa) | 89,64 | 130,92 | 117,00 | 139,65 | 135,14 |
| Biegemodul (MPa) | 3442,26 | 3447,16 | 3236,31 | 3677,62 | 3501,10 |
| Druckfestigkeit (MPa) | 234,38 | 202,02 | 209,87 | 229,48 | 248,11 |
| Quetschspannung (MPa) | 2010,4 | 182,41 | 176,53 | 167,70 | 163,78 |
| Druckmodul (MPa) | 1961,40 | 1892,75 | 1891,01 | 2167,35 | 2167,35 |
| 150°C: | | | | | |
| Zugfestigkeit (MPa) | 44,52 | 55,12 | 60,71 | 42,07 | 42,07 |
| Zugmodul (MPa) | 2608,66 | 2353,68 | 2471,36 | 1304,33 | 1235,68 |
| Zugdehnung (%) | 1,9 | 3,9 | 3,6 | 5,9 | 6,0 |
| Biegefestigkeit (MPa) | 84,83 | 92,38 | 91,70 | 62,08 | 62,08 |
| Biegemodul (MPa) | 2667,50 | 2432,13 | 2579,24 | 1323,94 | 1392,59 |
| Wärmestandfestigkeit (°C) | 238 | 201 | 204 | 200 | 199 |
| Glasübergangstemperatur (°C) | 177 | 192 | 180 | 174 | 175 |

Die Daten für die physikalischen Eigenschaften der untersuchten Reinen Harzsysteme veranschaulichen die wesentlichen Verbesserungen bei den Raumtemperaturbiege- und -zugfestigkeiten, die man für die modifizierten Systeme erhält, mit einer gewissen Abnahme in der durch HDT beobachteten thermischen Anwendbarkeit. Die Systeme Nr. 3 und Nr. 4 besitzen die besten Zugfestigkeitseigenschaften bei Raumtemperatur, während die Zugfestigkeitseigenschaften der Systeme Nr. 1 und Nr. 2 bei erhöhten Temperaturen überlegen sind. Die Biegungsdaten zeigen, dass sämtliche modifizierten Systeme bei Raumtemperatur stärker als die Kontrolle sind, wobei die Systeme Nr. 1 und Nr. 2 unter den modifizierten Formen die besten Festigkeiten bei erhöhten Temperaturen aufweisen. Die Druckfestigkeiten und -moduln für die Systeme Nr. 1 bis Nr. 4 sind mit der Kontrolle vergleichbar, während die Quetschspannung eine Abnahme zeigt, wahrscheinlich wegen einer Verringerung der Vernetzungsdichte. Im ganzen zeigen die Systeme Nr. 3 und Nr. 4 die besten statischen mechanischen Eigenschaften bei Raumtemperatur, während die Systeme Nr. 1 und Nr. 2 die besten Eigenschaften bei erhöhter Temperatur aufweisen.

Schlagprüfungen bei Raumtemperatur werden an den reinen Harzsystemen nach zwei Methoden durchgeführt. Die erste ist eine ungekerbte Charpy-Probe, um die zur Einleitung und Ausbreitung des Bruchs erforderliche Energie zu bestimmen. Diese Prüfung wird gemäss ASTM D-256 ausgeführt, ausser dass man an der Probe keine Kerbe anbringt. Die zweite Methode besteht in einer modifizierten Gardner-Schlagprüfung, wobei eine 25 × 25 × 3 mm grosse, nicht eingespannte Probe durch ein fallendes Gewicht mit 6 mm Nasenradius zerbrochen wird. Die Schlagfestigkeit wird gemessen als die Kraft, bei der Bruch eintritt. Diese Werte sind unten zusammen mit den Zugdehnungen bei Raumtemperaturen und 150 °C angegeben.

Schlagprüfung und Zugdehnungen an reinem Harz

| Eigenschaft \ System | Kontrolle | 1 | 2 | 3 | 4 |
|---|---|---|---|---|---|
| Raumtemperatur: | | | | | |
| Modifizierte Gardner-Methode (mkg) | 0,08 | 0,08 | 0,07 | 0,14 | 0,09 |
| Ungekerbte Charpy-Prüfung (Pa) | 1,18 | 1,77 | 1,96 | 1,67 | 4,02 |
| Zugdehnung (%) | 1,8 | 2,0 | 1,5 | 2,7 | 2,6 |
| 150 °C: | | | | | |
| Zugdehnung (%) | 1,9 | 3,9 | 3,6 | 5,9 | 6,0 |

Je nach der Schlagmessmethode, ob durch Zugdehnung, Charpy-Prüfung oder Kugelfall, erhält man verschiedene Werte, da die Prüfungen jeweils einen anderen Gesichtspunkt der Schlagfestigkeit oder Zähigkeit messen. Sämtliche untersuchten modifizierten Systeme zeigen erhöhte Schlagfestigkeit und Zähigkeit, wobei die Systeme Nr. 3 und Nr. 4 die grössten Zunahmen aufweisen.

Um diese Verbesserungen in den physikalischen Eigenschaften zu erhalten, muss man einen gewissen Verlust an Wärmestandfestigkeit (Tragfestigkeit bei erhöhten Temperaturen) in Kauf nehmen, doch ist die durch TMA gemessene Glasübergangstemperatur bei den Systemen Nr. 3 und Nr. 4 unverändert und bei den Systemen Nr. 1 und Nr. 2 sogar erhöht.

Die Feuchtigkeitsprüfungen an den reinen Harzsystemen werden bei 80 °C und 95% relativer Feuchte durchgeführt. Die Feuchtigkeitsaufnahme ist wie folgt:

Feuchtigkeitsalterung von reinem Harz

Bei 80 °C und 100% relativer Feuchte bis zum Gleichgewicht gealtert (25 Tage)

| System | % Gewichtszunahme |
|---|---|
| Kontrolle | 4,29 |
| 1 | 3,28 |
| 2 | 3,17 |
| 3 | 3,00 |
| 4 | 2,80 |

Die modifizierten Systeme zeigen eine deutliche Verbesserung der Beständigkeit gegen Feuchtigkeit.

Weiterhin ist aus der nachfolgenden Tabelle ersichtlich, dass die erwünschten Eigenschaften auch nach Feuchtigkeitsalterung im wesentlichen erhalten sind.

Wirkungen der Feuchtigkeitsaussetzung bei Raumtemperatur
Mechanische Eigenschaften des reinen Harzes

| | Kontrolle | 1 | 2 | 3 | 4 |
|---|---|---|---|---|---|
| % Gewichtszunahme | 4,29 | 3,28 | 3,17 | 3,00 | 2,80 |
| HDT (°C) | 141 | 148 | 133 | 117 | 110 |
| Biegefestigkeit (MPa) | 94,44 | 95,81 | 114,74 | 106,90 | 133,38 |
| Biegemodul (MPa) | 3446,20 | 3366,74 | 3295,15 | 3374,59 | 3451,08 |
| Zugfestigkeit (MPa) | 26,87 | 37,27 | 31,68 | 44,82 | 59,82 |
| Zugmodul (MPa) | 3080,38 | 3073,51 | 2998,00 | 3282,40 | 3209,83 |
| Dehnung (%) | 0,9 | 1,2 | 1,1 | 1,4 | 2,1 |

Ein Vergleich der obigen Werte mit den in der Tabelle unter der Überschrift «Physikalische Eigenschaften des reinen Harzes» angegebenen zeigt, dass die mechanischen Eigenschaften der erfindungsgemässen modifizierten Systeme weniger als die der Kontrolle beeinträchtigt werden. Die Beibehaltung der Eigenschaften lässt sich also der erhöhten Beständigkeit der vorliegenden Systeme gegen Feuchtigkeit zuschreiben.

IV. Verbundstoffeigenschaften:

Ein unidirektionaler Graphitpräpreg wird aus Graphitgarn Thornel-300 (Qualität WYP-30, Ausrüstung UC-309, ohne Zwirnung) hergestellt. Das Garn wird durch eine 30–35 Gew.-%ige Lösung von Harz/Härter in MEK/Aceton (50/50) geführt und auf einen Trommelwickler aufgewickelt, wobei man ein 3,65 m langes und 45 cm breites Band mit 8 Kabeln/cm erhält. Den Präpreg lässt man eine Stunde in der Luft trocknen und unterwirft ihn dann für drei Minuten einer Erhitzungsstufe bei 120 °C. Dies gibt einen Präpreg mit annehmbarer Anpassungsfähigkeit und Klebrigkeit. Der Präpreg wird geschnitten, in Schichten gelegt und durch Verpressen gehärtet. Die Imprägnierlösungen und der Härtungszyklus sind unten angegeben.

Verbundstoffimprägnierlösungen und Härtungszyklus

| Komponente (Gewichtsteile) \ System | Kontrolle | 1 | 2 | 3 | 4 |
|---|---|---|---|---|---|
| Epoxidharz B | 100 | 100 | 100 | 100 | 100 |
| Kontrolle | 44 | – | – | – | – |
| Nr. 1 | – | 85 | – | – | – |
| Nr. 2 | – | – | 100 | – | – |
| Nr. 3 | – | – | – | 85 | – |
| Nr. 4 | – | – | – | – | – |
| MEK | 144 | 185 | 200 | 185 | 200 |
| Aceton | 144 | 185 | 200 | 185 | 200 |

Verpressungs/Härtungszyklus für Verbundstoffe:
1) Raumtemperatur auf 176 °C, 3 °C/min.
2) 90 Minuten bei 176 °C halten; beim Gelpunkt 686,5 kPa aufbringen (10–20 Minuten nach Beginn der Haltezeit)
3) Auf Raumtemperatur abkühlen
4) 4 Stunden bei 205 °C nachhärten.

Sämtliche für Prüfungszwecke hergestellten Laminate werden nach den ASTM-Methoden D-3171, D-2734 und D-792 auf ihren Hohlraumgehalt analysiert. Es zeigt sich, dass alle gefertigten Tafeln gar keine Hohlräume enthalten. Die vorgelegten Verbundstoffdaten sind auf 30 Gewichtsprozent Harzgehalt korrigiert.

Zwanziglagige 0°-Tafeln werden jeweils aus den oben beschriebenen Systemen hergestellt. Aus diesen Laminaten erhält man Kurzstabscherproben und prüft diese gemäss ASTM D-2344 bei Raumtemperatur, −59 °C und 93 °C. Die 0°-Biegeeigenschaften erhält man mit 10-lagigen Tafeln, die gemäss ASTM D-790 bei Raumtemperatur, −59 °C und 93 °C geprüft werden. Vierzehnlagige, auf +45/90/−45/90 orientierte und in der 0°-Richtung gemäss ASTM D-3039 bei Raumtemperatur und −59 °C geprüfte Matrixzugproben werden zur Messung der kombinierten Auswirkungen von Scherspannung und Matrixfestigkeit verwendet. Die Daten für Kurzstabscherung, Biege- und Matrixzugfestigkeit sind unten angegeben.

| Eigenschaft \ System | Kontrolle | 1 | 2 | 3 | 4 |
|---|---|---|---|---|---|
| Kurzstabscherung, 0° | | | | | |
| (kPa) – 59 °C | 170,64 | 147,11 | 170,64 | 152,01 | 160,83 |
| Raumtemperatur | 159,85 | 159,85 | 159,85 | 144,16 | 182,41 |
| 93 °C | 143,18 | 138,28 | 138,38 | 124,55 | 174,56 |
| Biegefestigkeit, 0° | | | | | |
| (kPa) – 59 °C | 3177,47 | – | 4001,26 | 4001,26 | 3648,20 |
| Raumtemperatur | 3461,87 | 3667,78 | 3324,57 | 3403,03 | 3559,94 |
| 93° °C | 3452,06 | – | 3814,92 | 3648,20 | 3285,35 |
| Biegemodul,0° | | | | | |
| (kPa) – 59 °C | 91,21 | – | 105,92 | 97,09 | 111,80 |
| Raumtemperatur | 101,99 | 101,01 | 102,97 | 97,09 | 91,21 |
| 93 °C | 102,97 | – | 119,65 | 119,78 | 105,92 |
| Matrixzugfestigkeit | | | | | |
| (kPa) – 59 °C | 206,92 | 334,42 | 207,91 | 392,28 | 223,59 |
| Raumtemperatur | 223,59 | 364,82 | 246,16 | 456,03 | 221,64 |
| Matrixzugmodul | | | | | |
| (kPa) – 59 °C | 7571,00 | 4334,69 | 5933,24 | 7924,06 | 6884,51 |
| Raumtemperatur | 8188,85 | 6443,19 | 6462,81 | 9032,24 | 4844,65 |
| Matrixzugdehnung | | | | | |
| (%) – 59 °C | 4,3 | 5,6 | 4,5 | 5,6 | 5,0 |
| Raumtemperatur | 3,5 | 6,1 | 5,2 | 5,3 | 5,2 |

Obwohl die zur Herstellung der Prüftafeln angewandte Arbeitsweise nicht unbedingt optimal ist, werden die oben für jedes der fünf Systeme gegebenen Daten als gültig für einen Vergleich der Systeme angesehen. Die Schereigenschaften der modifizierten Härter scheinen ähnlich wie beim

Standardhärter zu sein, und die stark vom Fasergehalt abhängigen Biegeeigenschaften sind ebenfalls ähnlich.

Die Matrixzugprüfungen werden an allen fünf Systemen durchgeführt. Diese Prüfung misst die kombinierten Auswirkungen der Harzmatrix und der Schereigenschaften auf den Verbundstoff. Eine solche Messung kann als Hinweis auf Zähigkeit angesehen werden, wobei zunehmende Festigkeit und Bruchdehnung mit einer Zunahme der Zähigkeit in Beziehung stehen. Diese Daten zeigen einen realen Unterschied, da sämtliche modifizierten Systeme Verbesserungen über die Kontrolle zeigen, doch scheinen die Systeme Nr. 1 und Nr. 3 die besten zu sein.

Zusammenfassend ist ersichtlich, dass diese Erfindung neuartige, modifizierte Härtersysteme für Epoxidharze zur Verfügung stellt, die ausgezeichnete Leistungskennwerte aufweisen. Änderungen in der Herstellung, der Arbeitsweise und den Materialien sind möglich, ohne den durch die nachfolgenden Ansprüche definierten Schutzumfang der Erfindung zu überschreiten.

**Patentansprüche**

1. Härter für polyfunktionelle Epoxidharze, dadurch gekennzeichnet, dass er aus einem Anlagerungsprodukt eines Diaminodiphenylsulfons der Formel

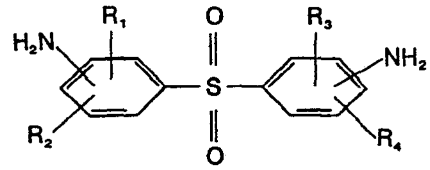

worin $R_1$, $R_2$, $R_3$ und $R_4$ unabhängig voneinander für Wasserstoff, geradkettiges oder verzweigtes Alkyl mit 1 bis 12 Kohlenstoffatomen oder Halogen stehen, und eines Diglycidyläthers eines mehrwertigen Phenols besteht, wobei dieser Härter etwa 2,5 bis 100 Aminowasserstoffäquivalente pro Epoxidäquivalent enthält.

2. Härter nach Anspruch 1, dadurch gekennzeichnet, dass als Sulfon ein unsubstituiertes Diaminodiphenylsulfon vorliegt.

3. Härter nach Anspruch 1, dadurch gekennzeichnet, dass der Diglycidyläther unter Bisphenoldiglycidyläthern der Formel

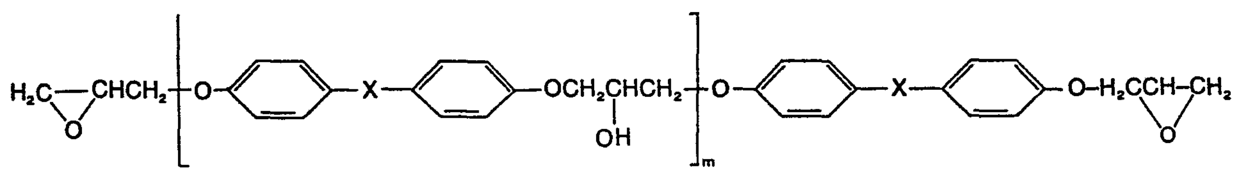

worin m 0–50 ist und X für

$-CH_2-$, 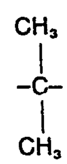 oder 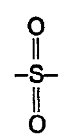

steht und den Diglycidyläthern des Resorcins, Brenzkatechins und Hydrochinons ausgewählt ist.

4. Härter nach Anspruch 3, dadurch gekennzeichnet, dass als Diglycidyläther der Bisphenol-A-diglycidyläther vorliegt.

5. Härtbares Gemisch, dadurch gekennzeichnet, dass es aus (a) einer Polyepoxidverbindung und (b) einem Härter nach Ansprüchen 1 bis 4 besteht.

6. Härtbares Gemisch nach Anspruch 5, dadurch gekennzeichnet, dass der Härter und die Polyepoxidverbindung in stöchiometrischen Mengen $\pm 50\%$ vorliegen.

7. Härtbares Gemisch nach Anspruch 5, dadurch gekennzeichnet, dass die Polyepoxidverbindung aus Diglycidyläthern mehrwertiger Phenole, Hydantoinepoxidharzen, Polyglycidylestern, glycidylierten aromatischen Aminen, glycidylierten Aminophenolen oder cycloaliphatischen Epoxidharzen besteht.

8. Härtbares Gemisch nach Anspruch 5, dadurch gekennzeichnet, dass als Polyepoxidverbindung tetraglycidyliertes Methylendianilin vorliegt.

9. Härtbares Gemisch, dadurch gekennzeichnet, dass es aus (a) tetraglycidyliertem Methylendianilin und (b) einem Härter aus dem Reaktionsprodukt vor 4,4'-Diaminodiphenylsulfon mit Bisphenol-A-diglycidyläther besteht, wobei dieser Härter zu 85% der stöchiometrischen Menge bezogen auf das Dianilin vorliegt.

10. Verwendung der härtbaren Mischung gemäss Anspruch 5 zur Herstellung von Verbund- oder Pressstoffen.

**Claims**

1. A hardener for polyfunctional epoxy resins, which hardener comprises the adduct of a diamino diphenylsulfone corresponding to the formula

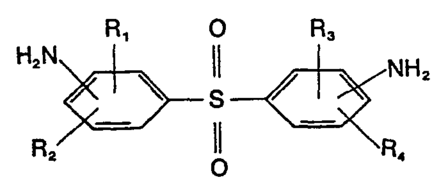

wherein $R_1$, $R_2$, $R_3$ and $R_4$ are independently hydrogen, straight chain or branched alkyl of 1 to 12 carbons or halogen, and a diglycidyl ether of a polyhydric phenol; said hardener having from about 2.5 to 100 equivalents of aminohydrogen per equivalent of epoxy.

2. A hardener according to claim 1, wherein said sulfone is an unsubstituted diamino diphenylsulfone.

2. A hardener according to claim 1, wherein said diglycidyl ether is selected from the group consisting of diglycidyl ethers of bisphenols corresponding to the formula

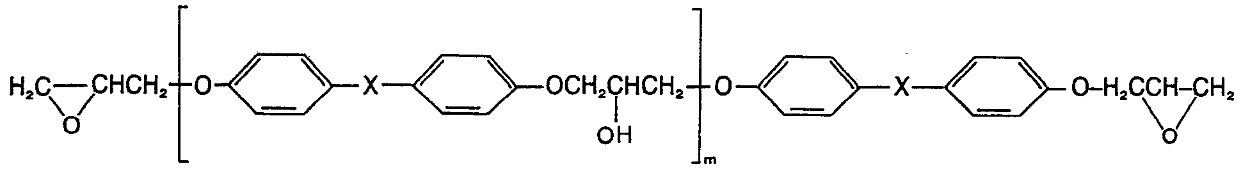

wherein m is 0–50 and X is

$-CH_2-$, 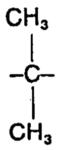 or 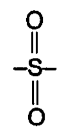

and the diglycidyl ethers of resorcinol, catechol and hydroquinone.

4. A hardener according to either of claims 2 or 3, wherein said diglycidyl ether is the diglycidyl ether of bisphenol A.

5. A curable mixture comprising (a) a polyepoxide compound and (b) a hardener according to any one of claims 1 to 4.

6. A curable mixture according to claim 5, wherein said hardener and said polyepoxide compound are present in stoichiometric amounts ±50%.

7. A curable mixture according to claim 5, wherein said polyepoxide compound comprises diglycidyl ethers of polyhydric phenols, hydantoin epoxide resins, polyglycidyl esters, glycidylated aromatic amines, glycidylated aminophenols or cycloaliphatic epoxy resins.

8. A curable mixture according to claim 5, wherein said polyepoxide compound is tetraglycidylated methylene dianiline.

9. A curable mixture comprising (a) tetraglycidylated methylene dianiline and (b) a hardener comprising the reaction product of 4, 4'-diamino diphenylsulfone and diglycidyl ether of bisphenol A; said hardener being present at 85% stoichiometry relative to said dianiline.

10. Use of a curable mixture according to claim 5 for the preparation of composites or moulding compositions.

**Revendications**

1. Durcisseur pour résines époxydiques polyfonctionnelles, durcisseur caractérisé en ce qu'il est constitué d'un produit d'addition d'une diamino-diphénylsulfone répondant à la formule:

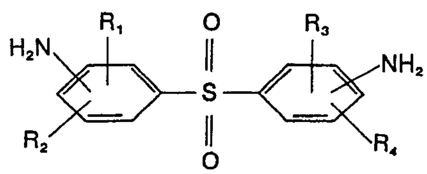

dans laquelle $R_1$, $R_2$, $R_3$ et $R_4$ représentent chacun, indépendamment les uns des autres, un atome d'hydrogène, un radical alkyle, linéaire ou ramifié, qui contient de 1 à 12 atomes de carbone, ou un atome d'halogène, et d'un éther diglycidylique de polyphénol, ce durcisseur renfermant d'environ 2,5 à 100 équivalents d'hydrogène aminé par équivalent époxydique.

2. Durcisseur selon la revendication 1, caractérisé en ce qu'il comporte, comme sulfone, une diamino-diphénylsulfone non substituée.

3. Durcisseur selon la revendication 1, caractérisé en ce que l'éther diglycidylique est pris dans l'ensemble constitué par les éthers diglycidyliques de bisphénols répondant à la formule suivante:

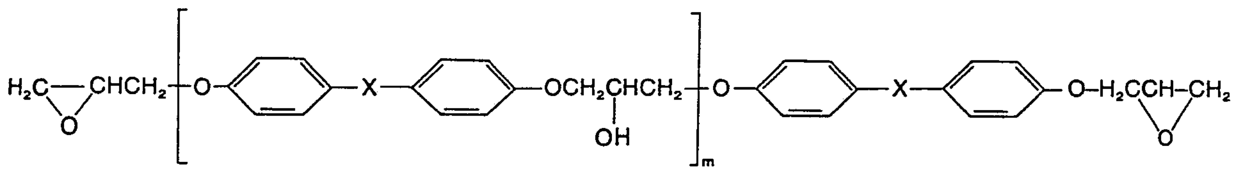

dans laquelle m est un nombre de 0 à 50 et X représente un radical

$-CH_2-$, 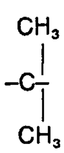 ou 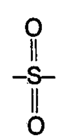

et les éthers diglycidyliques du résorcinol, du pyrocatéchol et de l'hydroquinone.

4. Durcisseur selon la revendication 3, caractérisé en ce qu'il comporte, comme éther diglycidylique, l'éther diglycidylique du bisphénol-A.

5. Mélange durcissable, caractérisé en ce qu'il est constitué (a) d'un composé polyépoxydique et

(b) d'un durcisseur selon l'une quelconque des revendications 1 à 4.

6. Mélange durcissable selon la revendication 5, caractérisé en ce qu'il contient le durcisseur et le composé polyépoxydique en des quantités stoechiométriques plus ou moins 50%.

7. Mélange durcissable selon la revendication 5, caractérisé en ce que le composé polyépoxydique est pris dans l'ensemble constitué par les éthers diglycidyliques de polyphénols, les résines époxydiques dérivant de l'hydantoïne, les esters polyglycidyliques, les amines aromatiques glycidylées, les aminophénols glycidylés et les résines époxydiques cycloaliphatiques.

8. Mélange durcissable selon la revendication 5, caractérisée en ce qu'il contient, comme composé polyépoxydique, le méthylène-dianiline tétraglycidylée.

9. Mélange durcissable caractérisé en ce qu'il est constitué (a) de méthylène-dianiline tétraglycidylée et (b) d'un durcisseur qui est le produit de réaction de la diamino-4,4' diphénylsulfone avec l'éther diglycidylique du bisphénol A, la proportion de ce durcisseur représentant 85% de la proportion stoechiométrique par rapport à la dianiline.

10. Application du mélange durcissable selon la revendication 5 à la fabrication de matériaux composites et d'objets moulés par compression.